# EUROPEAN PATENT APPLICATION

(11) **EP 1 930 070 A1**
(43) Date of publication of application: **11.06.2008**
(21) Application number: 05787971.0
(22) Date of filing: 29.09.2005
(51) Int. Cl.: B01F 5/06

(54) **MICRODEVICE AND METHOD OF MAKING FLUID MERGE**

(71) Applicant: FUJIFILM Corporation, Minato-ku Tokyo 106-8620 (JP)
(72) Inventor: MAE, Kazuhiro, Kyoto-shi, Kyoto 606-0023 (JP); YOSHIDA, Junichi, Hirakata-shi, Osaka 573-0076 (JP); SUGA, Seiji, Kyoto-shi, Kyoto 615-8251 (JP); KAWAGUCHI, Tatsuya, Ube, Yamaguchi 755-8633 (JP); TANABE, Jun, Minami-Ashigara-shi, Kanagawa 250-0193 (JP); DAITO, Noboru, Kitakyusyu-shi, Fukuoka 804-8503 (JP); NAGASAWA, Hideharu, Minami-Ashigara-shi, Kanagawa 250-0193 (JP); NOMURA, Hideyuki, Amagasaki Hyogo 660-0095 (JP); HIKAGE, Shigeki, Hiratsuka Kanagawa 2540016 (JP); YUBE, Kunio, Tokyo 125-0051 (JP)
(74) Representative: HOFFMANN EITLE
(86) International application number: PCT/JP2005/017965
(87) International publication number: WO 2007/037007

(57) **Abstract**

There is provided a microdevice which supplies two or more kinds of fluids flowed into itself independently toward a joining region respectively, and which discharges those fluids from the joining region. The microdevice is constituted by a supply channel which supplies each fluid flowed into the microdevice toward the joining region and a discharge channel which discharges the joined fluid from the joining region toward outside of the microdevice, in a manner that a supply channel which supplies at least one kind of the fluid has a plurality of subchannels which supply the fluid supplied into the microdevice toward the joining region, and those subchannels and supply channels are formed so that at least one central axis of the plurality of subchannels and at least one central axis of the supply channel which supplies at least one kind of fluid other than the kind that the subchannel supplies or of the subchannel intersect at one point.

## Description

### Technical Field

The present invention relates to a microdevice for joining plural kinds of fluids and a method for joining fluids. More particularly, it relates to the microdevice and the method for joining fluids by which mixing and/or reaction of the fluids flowing together in this manner is carried out. The microdevice and the method for joining fluids of the present invention may be used in the case of manufacturing materials and products, for example, by mixing or reaction of fluids in the fields of chemical industry and pharmaceutical industry.

Additionally in the present invention, the term "fluid" is used as including a liquid and a liquid mixture which can be treated as a liquid. Examples of such mixture include a liquid containing a solid and/or a gas, and may be a liquid mixture containing powder like minute solids (e.g., metallic fine particles) and/or minute air bubbles. Further, the liquid may contain another kind of liquid being not dissolved, and may be, for example, an emulsion. In another embodiment, the fluid in the present invention may be a gas, and the gas may contain a solid or a fine particle of the solid.

### Background Art

Various kinds of microdevices are proposed for the purpose of mixing fluids (here, "mixing" includes mixing accompanied by reaction). Mixing in such a microdevice takes advantage of a diffusion phenomenon of substances between the fluids to be mixed. In order to carry out the mixing rapidly and homogeneously, increasing a contact area of the fluids to be mixed becomes a requirement. Such microdevices have been disclosed, for example, in the following Patent Documents 1 to 3.

In the microdevices disclosed in Patent Documents 1 and 2, two kinds of fluids flow along with a microchannel, maintaining a state of contacting each other. The microchannel can be formed easily in accordance with a semi-conductor manufacturing technology, specifically a photolithoetching. However, the formed microchannel has a shallow depth relative to the width and as a result, the contact area of the fluids is not always sufficient. Recently, a technology for forming a deeper microchannel by dry etching method is proposed, however, to form such a microchannel requires a large amount of expenses.

In the case where the microchannel width (the width in the vertical direction relative to the flow direction) is large and where substances between the fluids to be mixed requires much times in diffusing toward the direction, an extent of mixing is clearly different at the neighborhood of contact interface of fluids and at a spaced-apart location. At the location most far apart from the contact interface, it is possible that the fluid is discharged from the microdevice without substantially occurring the mixing. When making two kinds of reacting substances to be reacted by mixing with the use of such a microdevice, progression degree of reaction is different depending on the location of the microdevice, resultantly failing to execute any homogenous reaction.

Generally, the microdevices are designed in a tailor-made fashion so that an optimum operation is possible for a specific operating condition, however, when using such a microdevice with different operating condition, there are many cases that the microdevice cannot demonstrate its ability sufficiently. In other words, operating condition ranges in using the conventional microdevices are limited. In the case of the microdevice designed to supply two kinds of fluids with the same quantity of the flow, for example, and the operating condition becomes such that the ratio between their quantities of the flow is largely different, it is not easy to stably mix the fluids keeping the ratio between their quantities of the flow constant. As a result, any desired product is not certainly expected.

Solid precipitates, precipitated solid coheres, and they occlude the microchannel, failing to execute the mixing operation stably and continuously. As a matter of course, when the intended precipitation occurs in the case of carrying out crystallization reaction to generate fine particles, the occlusion particularly makes problem.

The inventors executed crystallization reaction of a fine particle of silver chloride (AgCl) by means of a microdevice disclosed in the Patent Document 3 below. As a result, an aggregation of fine particles occurred at a position immediately behind a slit part forming thin layers of each liquid to be supplied, a clogging generated within 10 minutes after starting to supply the liquid and a continuation of the operation became difficult.

In chemical processes, executing an operation of mixing or reaction with a plurality of steps happens often. When carrying out those plurality of steps by means of the microdevice, for example, executing single mixing or single reaction by means of single microdevice, and executing the next mixing or reaction by supplying the product (e.g., mixture and reaction product may be included) obtained in the microdevice to the next microdevice.

When using two microdevices in series as mentioned above, it is necessary to connect between those microdevices using a piping and a coupling. The volume among the piping and the coupling is comparatively large and may be larger than an inner capacity of the microdevice depending on a case. As a result, it takes too long time for the fluid to pass through the piping and the coupling to execute the next mixing or reaction just after the first mixing or reaction.

On the other hand, regarding with the fluid existing in the piping or in the coupling, because the mixing or reaction is in an intermediate stage, when the process is stopped, such a fluid cannot be treated as a final product and will cause losses. Moreover, it becomes difficult to realize the compact plant being advantageous of employing the microdevice.
[Patent Document 1] Japanese National Publication of International Patent Application No. 10-507406
[Patent Document 2] Japanese Patent Application Laid-Open No. 2000-298109
[Patent Document 3] Patent Gazette of International Publication No. WO 00/62914

### Disclosure of the Invention

### The Problem to be solved by the Invention

Accordingly, the problem to be solved by the present invention is to alleviate at least one of the above various kinds of problems of the microdevice, and preferably to cancel it. Specifically, an object of the present invention is to achieve, for example, at least one of the following items.

Namely:
to provide a microdevice improved concerning rapid and homogeneous mixing and a method for joining fluids using the microdevice;
to provide a microdevice capable of flexibly responding to an operating condition of mixing and a method for joining fluids using the microdevice;
also in these microdevices or methods for joining fluids using the microdevice,
to provide a microdevice suppressing an occlusion and capable of stably continuing to operate a method for joining fluids using the microdevice; and
to provide a microdevice being compact and capable of flexibly responding to various mixing processes and a method for joining fluids using the microdevice.

### Means to solve the Problems

As a result of intensive researches and studies to achieve the above object by the present inventors, it was found that a diffusion phenomenon in the microdevice receives influence by various kinds of factors, however, in order to achieve a more rapid and homogeneous mixing, it is important to study an approach for increasing an interfacial area between the fluids to be mixed in a short time. Further repeating the researches and studies, it was found that the above object is completed by flowing the fluids into a joining region, so that, when using a microdevice in a joining region of which a stream of two or more kinds of fluids flows and out of which the stream is discharged after joining, in an occasion of supplying (when the fluid without dividing remains, just supplying the stream of the fluid toward the joining region) a stream of at least one kind of fluid toward the joining region as a form of a substream divided into a plurality of fluids, at least one central axis of at least one kind of substream in the fluid to be supplied after being divided, and a central axis of at least one substream (when being supplied after being divided) of at least one kind of fluid in other kinds than the fluid and/or a stream (when the fluid without dividing remains) intersect at one point, preferably intersect at one point in the joining region.

In order to achieve the above object, the present invention provides a microdevice which supplies two or more kinds of fluids flowed into the microdevice independently toward a joining region respectively, and which discharges those fluids from the joining region. The microdevice comprises a supply channel which supplies each fluid flowed into the microdevice toward the joining region and a discharge channel which discharges the joined fluid from the joining region toward outside of the microdevice. The microdevice is characterized in that at least one supply channel which supplies the fluid has a plurality of subchannels flowing into the joining region (and these subchannels supply the fluids into the joining region), and that the subchannels and the supply channels are formed so that at least one central axis of the plurality of subchannels and at least one central axis of the supply channel (when the supply channel without any subchannel exists) which supplies at least one kind of fluid other than the kind that the subchannel supplies or of the subchannel intersect at one point. Additionally, it is preferable for the microdevice of the present invention that a crossover point where the central axes intersect each other locates in the joining region.

In order to achieve the above object, the present invention further provides a method for joining fluids which separately supplies streams of two or more kinds of fluids toward the joining region by means of the microdevices having the joining regions and which makes them joining at the region. The method for joining fluids is characterized by dividing a stream of at least one kind of the fluids into a plurality of substreams and supplying them toward the joining region, when a fluid without any dividing exists, by supplying the stream of the fluid toward the joining region, and by supplying them toward the joining region so that at least one central axis of at least one kind of substream in the fluid to be supplied after being divided, and a central axis of at least one substreams of at least one kind of fluids other than the kind of the fluid or the stream (when a fluid without dividing exists) intersect each other at one point. Additionally, it is preferable for the method for joining fluids of the present invention that the crossover point where the central axes intersect locates in the joining region.

In one embodiment of the microdevice or the method for joining fluids of the present invention, a central axis of single subchannel (or substream) and a central axis of single supply channel (or stream) which supplies other kind of fluid (referred to as the second fluid for convenience) different from the fluid (referred to as the first fluid for convenience) supplied by the subchannel intersect each other at one point. On the other hand, in another embodiment of the microdevice or the method for joining fluids of the present invention, a central axis of single subchannel (or substream) and a central axis of single subchannel (or substream) which supplies other kind of fluid (the second fluid) different from the fluid (the first fluid) supplied by the subchannel intersect each other at one point. In other words, single central axis of the subchannel (or substream) of the first fluid and single central axis of the supply channel (or stream) of the second fluid or of the subchannel (or substream) intersects each other.

In still another embodiment, a central axis of the other subchannel (or substream) of the first fluid and/or a central axis of the other subchannel (or substream) of the second fluid also intersect at the same point.

In addition to those fluids, another one or more kinds of fluid may be supplied through the subchannel or the supply channel toward the joining region, and one or more central axes of such a channel may intersect at the same point.

In the present invention, terms "channel" and "stream" are employed and the former indicates a component as a flow path of the microdevice, the latter indicates the fluid flowing through the channel. In the present invention, an attention is particularly paid to the central axes of the channel and the stream and because a shape of the stream corresponds to a shape of an inner space of the channel, the meanings of those terms may be considered as substantially the same allowing to employ those terms in the sense. Thereupon, items applicable to "channel" are applicable to "stream" equally. Further, the prefix "sub" is employed as meaning the channel or the stream that are divided.

### Effects of the Invention

In the microdevice or the method for joining fluids of the present invention, when two or more kinds of different fluids are sent toward the joining region, at least one central axis of the supply channels (thereupon, streams) or the subchannels (thereupon, substreams) which supply each fluids of at least two or more kinds of fluids intersect each other at one point in the a joining region (with the proviso that at least one kind of the fluid is supplied toward the joining region through the subchannel (thereupon, in the form of the substream)).

In accordance with the microdevice or the method for joining fluids of the present invention, at least one object of the rapid and homogeneous mixing and the flexible responding to the operating condition of the mixing can be at least alleviated and preferably be canceled. As a result, the microdevice and the method for joining fluids are applicable to the mixing of two or more kinds of fluids and favorably suitable in executing a reaction together with the mixing.

In the present invention, because collisions and contacts occur in such a manner that the central axes of joining fluids intersect each other at one point, those fluids are instantly divided (or micronized) into small fluid wads by their kinetic energy, together with the contact condition of the fluid wads being improved. As a result, a contact interfacial area between the joining fluids suddenly increases and the mixing between those fluids will be accelerated, thereby achieving faster and more homogeneous mixing.

### Brief Description of the Drawings

Figure 1 is a conception diagram schematically illustrating a microdevice in accordance with the present invention;
Figure 2 is another conception diagram schematically illustrating a microdevice in accordance with the present invention;
Figure 3 is a diagram schematically illustrating a situation how a substream of a fluid A and a stream of a fluid B join together, also explaining the meaning that those central axes intersect each other;
Figure 4 is an exploded perspective view illustrating one embodiment of the microdevice in accordance with the present invention;
Figure 5 is an exploded perspective view illustrating another embodiment of the microdevice in accordance with the present invention;
Figure 6 is an exploded perspective view illustrating still another embodiment of the microdevice in accordance with the present invention;
Figure 7 is a diagram schematically illustrating a preferable modified embodiment of the microdevice in accordance with the present invention;
Figure 8 is a diagram schematically illustrating a microdevice in accordance with the present invention whose discharge channel has a diameter diminishing in its midway;
Figure 9 is a conception diagram illustrating microdevices connected in series; and
Figure 10 is an exploded perspective view schematically illustrating a microdevice which supplies a sheath fluid.

### Description of Symbols

10 ... joining region
12 ... supply channel
14 ... branching point
16, 16' ... subchannels
18 ... supply channel
20 ... central axis crossover point
22, 22'... substreams
24 ... stream
26 ... discharge channel
100 ... microdevice
102... supply element
104 ... joining element
106 ... discharge element
108, 110 ... ring-shaped channels
112, 114, 116, 118 ... bores
120 ... end part of bore
122 ... surface of a joining element facing to discharge element
124, 126 ... microchannels
128 ... center
130, 132, 134 ... bores
136 ... aperture member
138 ... joining fluids stream
140 ... sheath fluid supply element
142 ... tube member
144 ... sheath fluid supply channel
146 ... bore
148 ... ring-shaped channel
150 ... subchannel
152 ... joining fluid
154 ... scabbard-shaped sheath fluid
156 ... central part of sheath fluid supply element

### Best Mode for Carrying out the Invention

The microdevice of the present invention has a function of supplying two or more kinds of fluids flowed into itself independently toward a joining region respectively, and a function of discharging those fluids from the joining region. The term "independently" means that each fluid flowing into the microdevice pass through different passages until the fluid arrives at a joining region, and different kinds of fluids do not flow through the same passage, i.e., meaning "supplied separately".

In the microdevice of the present invention, two kinds or more fluids are supplied via an entrance port into the microdevice, and they are supplied toward the joining region through the supply channel. The supply channel is not particularly specified so long as it is a passage that supplies the fluid supplied into the microdevice toward the joining region, and usually, it is a capillary tube member having a circular or a rectangular cross-section. A fluid that flows through such a supply channel is referred to as a stream.

The joining region is a region where those fluids join together, and is a region where those separately supplied fluids contacts each other for the first time. Each supply channel unites in the joining region, namely, each supply channel terminates in the joining region and the fluids joined together in the joining region will mix each other. Accordingly, all kinds of the fluids supplied into the microdevice exist in the joining region. In this meaning, only one kind of fluid substantially exists in the supply channel (or subchannel).

Then, the fluid joined together in the joining region will be flown out from the joining region through the discharge channel toward outside of the microdevice. Accordingly, regarding with the discharge channel, its end part starts from the joining region. Similarly with the supply channel, the discharge channel is not particularly specified so long as it is a passage which discharges the fluid joined together in the joining region, and usually, it is a capillary tube member having a circular or a rectangular cross-section. As described above, a region where the joining of the supplied fluids occurs is the joining region, and a channel where the joined fluid passes through when the joined fluid is discharged toward outside of the microdevice is the discharge channel. The number of the discharge channel is usually one but may be, for example, two or more, and further, single discharge channel may branch to a plurality of channels (i.e., subchannel) on its midway.

The subchannel is a flow path which transports the stream of the fluid being supplied into the microdevice in the form of divided plurality of substreams, and similarly as the above mentioned supply channel, it is not particularly specified so long as it is a passage which supplies the fluid supplied into the microdevice toward the joining region, and usually, it is a capillary tube member having a circular or a rectangular cross-section. Generally, the diameter of the subchannel is equivalent to the diameter of the supply channel or narrower than that.

The term "microdevice" in the present invention is a generic name of a device which makes fluids flowing through a minute flow path (microchannel) and/or makes them join there together, and which operates mixing, reaction, heat exchange or so caused by the action. Specifically, a microdevice mainly aiming mixing is named as a micromixer, a microdevice mainly aiming reaction is named as a microreactor, and a microdevice mainly aiming heat exchange is named as a minute heat exchanger (microheat exchanger). The diameter or the equivalent diameter (when the cross-section of the channel or the stream is not circular) of the minute flow path (microchannel) or of the stream which passes through the channel is not larger than 1 mm. Specifically, the diameter or the equivalent diameter is usually not larger than 500 µm, and preferably not larger than 100 µm. Further, the term "equivalent diameter" is employed with a meaning used in the field of fluid dynamics. Additionally, the above-mentioned supply channel and discharge channel (they are generically named as merely channels) may be straight or curved.

In the above joining region, as may be easily understood, the one end part corresponds to a terminal end part, the other end part corresponds to a leading end part and the intermediate portion between the end parts is equivalent to the joining region. Namely, the joining region exists adjacently to the supply channel along with a flow direction of the fluid, and the discharge channel exists adjacently to the joining region. However, the number of the supply channel and the subchannel is totally plural, and the number of the discharge channel may be one or more. Therefore, although the term "end part" literally means "end", it is not necessary to be end in fact, and rather, each end part means an upstream side and a downstream side of the joining region making reference with the flowing direction of the fluid in the microdevice.

Additionally, regarding with the above neighboring relationship, it is not always necessary that a clear boundary zone is stipulated, a clear boundary zone may not exist between the terminal end part of the supply channel and the end part (or upstream side) of the joining region, and/or a clear boundary zone may not exist between the other end part (or downstream side) of the joining region and the leading end part of the discharge channel. As a conclusion, in the microdevice of the present invention, in one case for example, the downstream side of the joining region may gradually change into the leading end part of the discharge channel, and in another case, the joining region may not substantially exist as a region by the fact that the leading end part of the discharge channel is compatible with the joining region. In other words, the discharge channel has the joining region at the end part.

In the microdevice of the present invention, two or more kinds of the fluids will join together in the joining region. Each fluid is separately supplied toward the joining region through the supply channel. At least one kind of the fluids thus supplied will be supplied by means of a supply channel in a form of a plurality of subchannels respectively. In this case, it is not always necessary that the supply channel is constituted by such a subchannel for its whole length, but it is necessary, while at least flowing into the joining region, that the at least one kind of the fluids flow into the joining region passing through the plurality of subchannels.

Therefore, it may be possible that the at least one kind of the fluid (for example, the above-mentioned first fluid), for example, flows through single supply channel at first, and then, flows through the plurality of subchannels formed by branching of the supply channel on its midway, and finally flows into the joining region from the end part of the subchannel. In another embodiment, without branching on its midway, at least one kind of the fluid may flow as the plurality of substreams at the timing of flowing into the microdevice, and in this case, the supply channel which supplies the fluid is constituted by the plurality of subchannels over the whole length.

The fluid divided and supplied as the above description is at least one kind among two or more kinds of the fluids to be supplied into the microdevice, further more kinds of the fluids may be divided and supplied. In that case, a plurality of subchannels exists for each fluid. Further, all kinds of fluids may be divided and supplied.

When a stream of the one kind of the fluid is supplied through a subchannel toward the joining region, the number of the subchannel is not particularly limited. Because the structure of the microdevice will become complicated, there may be the case that providing large numbers of subchannels is not preferable. Usually, one kind of the fluid is supplied toward the joining region preferably through 2 to 10 subchannels, more preferably through 2 to 5 subchannels, for example, through 2, 3 or 4 subchannels.

In the microdevice of the present invention, the central axis of at least one subchannel and the central axis of at least one subchannel different from the former subchannel which supplies at least one kind of the fluid intersect each other, or at least two central axes of subchannels which supply each different fluid respectively intersect each other preferably at one point in the joining region as the above description. In the present invention, the central axis of the supply channel or the subchannel means an axis (or a straight line) along with a moving direction of the center of mass of the fluid which flows through the supply channel or the subchannel, i.e., of the center of mass (or the center of gravity) of the fluid which exists in a portion of the supply channel or the subchannel both adjacent to the joining region.

As may be easily understandable, the fluid that passes through the supply channel or the subchannels of the microdevice as a stream or a substream can be considered as a fluid wads corresponding to inner space of these channels. Accordingly, the fluid that passes as the stream or the substream has a central axis substantially coinciding with the central axis of the supply channel or the subchannel. In the method of the present invention, such a central axis is named as the central axis of the stream or the central axis of the substream.

To be concrete, when the portion of the supply channel or the subchannel flowing into the joining region is of tube-shaped, an axis which passes the center of gravity (geometric center of gravity) of the cross-section perpendicular to the longitudinal direction of the tube and along with the longitudinal direction of the tube corresponds to the central axis. Accordingly, the central axis corresponds to the central axis of the stream or the substream of the fluid that flows through such a channel. For example, when the channel or the subchannel (thereupon, stream or substream) is cylindrical or rectangular tube-shaped, a straight line which passes through the center of gravity (the center of circle or the crossover point of diagonal lines) of the cross-section (i.e., circular or rectangular) perpendicular to the longitudinal direction of the tube and along with the longitudinal direction of the tube becomes the central axis. The concept of such the central axis will be easily understood to those skilled in the art, depending on the cross-sectional shape of the channel.

In the microdevice of the present invention, the central axis of at least one subchannel for at least one kind of the fluid and at least one central axis of the supply channel or the subchannel for at least one kind of another fluid intersect each other at one point preferably in the joining region. Intersecting at one point means, when the objective central axes are two, that those central axes intersect each other, and when the objective central axes exceed two, that all such central axes intersect at one point each other.

To be concrete, when two kinds of fluid join together in one embodiment, supplying one fluid through the subchannel and supplying another fluid through the supply channel both toward the joining region, one or more, the most preferably all the central axes of the subchannel and the central axis of the supply channel intersect at one point each other. In another embodiment, supplying both fluids through the subchannel toward the joining region, the central axes of one or more of each fluid, most preferably all the central axes of the entire subchannel intersect each other at one point.

When three or more kinds of the fluids are supplied, at least one kind among them, preferably two kinds, most preferably three kinds of the fluids will be supplied through the subchannel. In this occasion, the central axis of at least one or more subchannels for at least one kind of the fluid, and at least one or more central axes of the channels or subchannels for another two or less kinds of fluids intersect each other at one point. It is the most preferable that all the central axes intersect each other at one point.

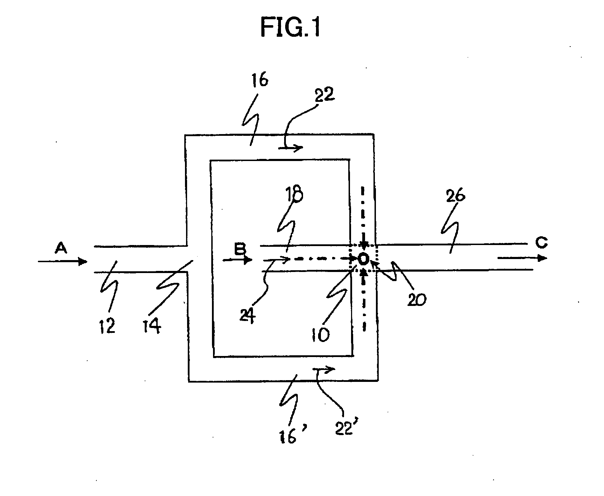

Hereinafter, preferred embodiments of a microdevice and a method for joining fluids according to the present invention are described in detail with reference to the attached drawings. A conception diagram schematically illustrating a microdevice of the present invention is shown in Figure 1. Figure 1 illustrates a concept of constitution of a channel of a microdevice that joins a fluid A and a fluid B as two kinds of fluids together in a joining region. In the microdevice, a channel as shown in Figure 1 is formed.

In Figure 1, the microdevices has a joining region 10 (rectangular region surrounded by dotted lines) and as shown in arrows, the fluid A and the fluid B are supplied into the microdevice from its outside toward the joining region. The fluid A supplied into the microdevice flows through a supply channel 12 in the form of a stream and then, is divided at a branching point 14 and further supplied toward the joining region 10 through subchannels 16 and 16', i.e., in the form of substreams 22 and 22'. The fluid B supplied into the microdevice passes through the supply channel 18 and then, is supplied toward the joining region 10 in the form of a stream 24 without being divided.

With regards to the joining region 10 in Figure 1, at one side between subchannel 16 and 16' of the fluid A, the supply channel 18 of the fluid B flows in and at the other side between subchannels 16 and 16' of the fluid A, a discharge channel 26 for the joined fluid starts. Those all channels are arranged substantially in the same plane at equal interval angles of 90 degrees each other around the joining region 10. In the embodiment shown in Figure 1, although the joined fluid is discharged through single discharge channel 26 as a fluid mixture component C as a product formed by joining outside the microdevice, the number of the discharge channel may be plural.

As shown in Figure 1, the fluid A flows through the subchannels 16 and 16' into the joining region 10 in the form of the substreams 22 and 22'. On the other hand, the fluid B flows into the joining region 10 by just in the form of the stream 24 without being divided. Alternate long and short dash lines represent the central axes of those substream and stream. The embodiment of Figure 1 illustrates the case where the channel and the subchannel have a shape of cylindrical or rectangular tube. Accordingly, Figure 1 draws the central axis in a manner that it passes substantially through the center of the channel and the subchannel and illustrates the situation how the central axes intersect each other at a point 20.

Additionally, when the fluids join together as the above description, as may be easily understood, the fluids collide and contact with each other and resultantly mix. By the above reason, the microdevice of the present invention has a function of a mixing device and the method for joining fluids of the present invention may be named as a method for mixing fluids.

Further, when the joining fluids have reactive properties each other, both fluids come into contact and begin to react in the joining region 10, and a mixture of the fluid formed by the joining together may contain a reaction product. In this case, the joining region provides a field of reaction. Moreover, the reaction may further advance in the discharge channel 26. In this case, by the above reason, the microdevice of the present invention has a function of a reaction device and the method for joining fluids of the present invention may be named as a method for making the fluids to react. Examples of the reaction include an ion reaction intended for inorganic substance, organic substance and so on, an oxidation-reduction reaction, a thermal reaction, a catalytic reaction, a radical reaction, a polymerization reaction, etc.

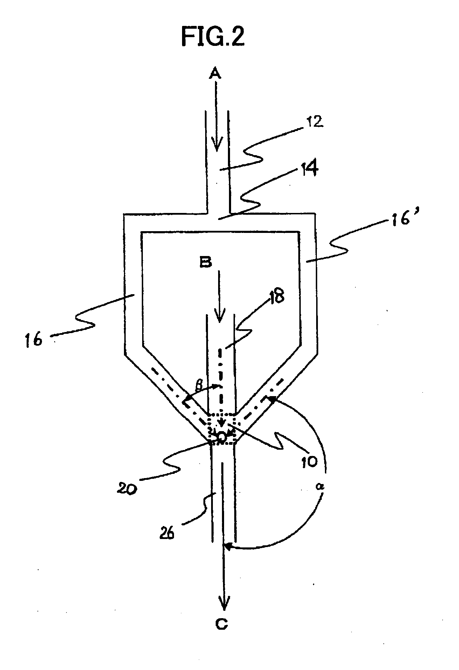

A conception diagram illustrating another embodiment of the microdevice of the present invention is shown in Figure 2, how the channel appears will be understandable similarly as in Figure 1. The same reference numbers are endowed to the element having substantially the same function as those in Figure 1, which is true in other drawings. In the embodiment shown in Figure 2, an intersecting angle with which the supply channel 18 and the subchannel 16 or 16' intersect is different from the embodiment shown in Figure 1. Accordingly, the embodiment shown in Figure 2 is different from the embodiment shown in Figure 1 in a viewpoint that the angle formed by the intersection of the central axes of the channels is different. In the embodiment shown in Figure 2, the angle (smaller angle) between the central axis of supply channel 18 and the central axis of the subchannel 16 or 16' is smaller than 90°. In the embodiment shown in Figure 2, the angle β made by the central axis of the supply channel and the central axis of the subchannel is, for example, 45°. Further, the angle a made by the central axis of the discharge channel 26 and the central axis of the subchannel 16 or 16' is, for example, 135°.

In the microdevices of the present invention, when one subchannel is specified regarding with the fluid supplied through the supply channel and the subchannel toward the joining region, it is preferable that the channel is constituted so that the fluids can be supplied in a manner that the kind of the fluid supplied through the subchannel toward the joining region is different from the kind of the fluid supplied through another subchannel or supply channel, which is supplied toward the joining region most adjacently to the subchannel. Namely, it is preferable that those fluids are supplied toward the joining region so that a kind of fluid in a substream flowing into the joining region is different from a kind of fluid in a substream or a stream flowing into the joining region most adjacently to the substream. The term adjacent is determined on the basis of the location in the joining region into where the stream or the substream flows.

For example, as shown in Figure 1 and Figure 2, a stream of the fluid which is supplied most adjacently to the substream of the fluid A supplied through the subchannel 16 or 16' is the fluid B which is supplied through the supply channel 18. Therefore, the mutual substreams in the same fluid are not in the most adjacent relation each other. In other words, deciding the location into where a specific substream (subchannel) flows, and when the distance between the above location and the location into where another substream (or subchannel) or stream (or supply channel) flows is taken into consideration, it is preferable to constitute the microdevice or to execute the method for joining fluid so that the distance between the locations into where the substreams (or subchannels) or streams (or supply channels) of different kinds of fluids flow becomes the smallest.

In Figure 1 and Figure 2, although a crossover point 20 is ideally a geometric point (i.e., without any size), it may be a broad region to some extent making such a point as a center realistically. To be concrete, making the central axis of each stream (or channel) as a center, when cylindrical portions with radii of 50 % or smaller, preferably 30 % or smaller, more preferably 20 % or smaller, the most preferably 10 % or smaller, particularly 5 % or smaller, and for example, 3 % or smaller than the diameter of the stream (or channel) or its equivalent diameter intersect each other (when they share at least one portion of their space), the central axes are considered as intersecting each other at one point in the present invention. Therefore, a space where such cylinders commonly occupy corresponds to the broad region to some extent. The intersection of the cylindrical portions with each other means that a part of the cylindrical portion in one central axis constitutes a part of the cylindrical portion in other one or more central axes in the crossover portion. Namely, all the cylindrical portions commonly share such a crossover portion.

It is preferable for the crossover point or the broad region to some extent to exist in the joining region as described above, and when it does not exist in the joining region, the crossover point usually exists in the discharge channel. In the present invention, it is appropriate that a point (including a broad region to some extent) at which two or more central axes of streams (or channels) that are supplied into the microdevice intersect exists.

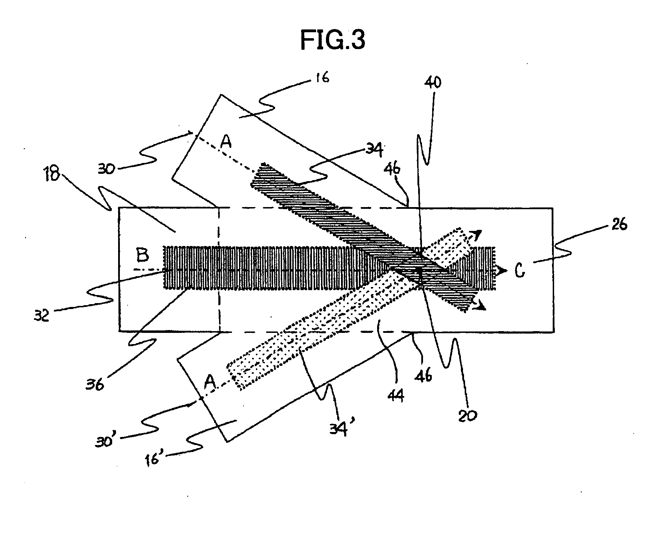

How the subchannels 16 and 16' and the supply channel 18 join together, accordingly, how the substreams 22 and 22' of the fluid A and the stream 24 of the fluid B join together are schematically shown in Figure 3. In the embodiment shown in Figure 3, for example, a plan view about those channel portions of the microdevice is schematically assumed. The joined fluids are discharged from the microdevice through the discharge channel 26.

In the embodiment shown in Figure 3, alternate long and short dash lines represent the central axes 30, 30' and 32 of each stream (or each channel). Further, cylindrical portions each having a radius of, for example, 15 % of equivalent diameters of substreams 22 and 22' is represented by horizontal lines 34 and a stipple 34' respectively, and a concentric cylindrical portion having a radius of, for example, 15 % of an equivalent diameter of the stream 24 is represented by vertical lines 36. In the embodiment shown in Figure 3, each central axis intersects at one crossover point 20.

As is apparent from Figure 3, three cylindrical portions each having a radius of 15 % of the equivalent diameters intersect each other sharing a diamond region 40. As is apparent from Figure 3, the diamond region 40 of the cylindrical portion 34 constitutes a part of the cylindrical portion 34 together with constituting a part of the cylindrical portion 34' and further, also constitutes a part of the cylindrical portion 36. Namely, the diamond portion 40 is a common space constituting a part of each cylindrical portions 34, 34' and 36. As described above, when the three cylindrical portions occupy the common space, those central axes are considered as intersecting at one point in the present invention. Additionally in Figure 3, making the flow direction of the fluid to be supplied as a datum line, a downstream portion under the broken line corresponds to a joining region 44, and a discharge channel 26 is considered as starting from points 46's. However, it is not necessary for a boundary zone between the joining region 44 and the discharge channel 46 to be clear.

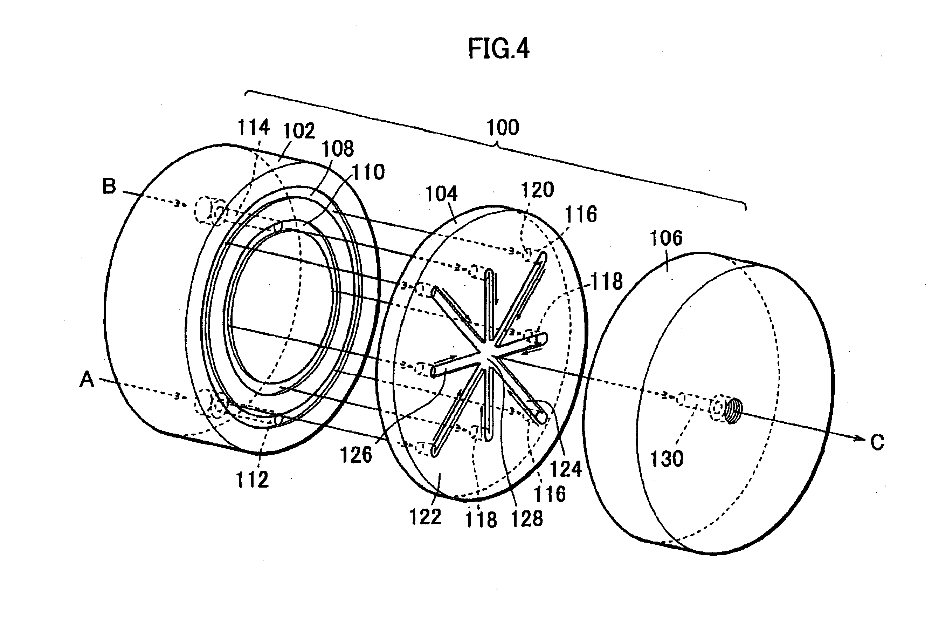

A perspective view illustrating one embodiment of the microdevice of the present invention is shown in Figure 4. In Figure 4, an exploded perspective view illustrating three parts constituting a microdevice 100 is shown. The microdevice 100 is constituted by a supply element 102, a joining element 104 and a discharge element 106 each having a cylindrical form respectively. When the microdevice 100 is constructed, those elements are assembled into a cylindrical form by fastening them integrally. In assembling that, for example, it is appropriate to provide bores (or holes, not shown) which penetrate through the cylinder in the circumferential part of each element at equal intervals each other, and to fasten those elements by means of bolt/nut integrally.

On a surface of the supply element 102 which faces the joining element 104, ring-shaped channels 108 and 110 having rectangular cross-sections are concentrically formed. In the embodiment shown in Figure 4, bores 112 and 114 are formed penetrating through the supply element 102 in its thickness (or height) direction and reaching to each ring-shaped channel respectively.

In the joining element 104, a bore 116 penetrating it in the thickness direction is formed. The bore 116 is designed, in fastening those elements for constituting the microdevice, so that an end part 120 of the bore 116 located in the surface of the joining element facing to the supply element to have an aperture in the ring-shaped channel 108. In the embodiment shown in Figure 4, four bores 116's are formed and arranged at equal intervals each other in the circumferential direction of the ring-shaped channel 108.

In the joining element 104, a bore 118 is formed penetrating it in the same manner as the bore 116. The bore 118 is also formed so as to have an aperture in the ring-shaped channel 110 similarly as the bore 116. In the embodiment shown in Figure 4, the bore 118 is also arranged at equal intervals each other in the circumferential direction of the ring-shaped channel 110 and further, the bore 116 and the bore 118 are arranged to be located alternately.

On a surface 122 of the joining element 104 facing to the discharge element 106, microchannels 124 and 126 are formed. One end part of the microchannel 124 or 126 corresponds to an aperture member of the bore 116 or 118, and another end part corresponds to the center 128 of the surface 122. All microchannels exist extending from the bore toward the center 128 and join together at the center. The cross-section of the microchannel may be, for example, rectangular.

In the discharge element 106, a bore 130 that passes through the center of the discharge element and penetrates in its thickness direction is formed. Accordingly, the bore has an aperture at the center 128 of the joining element 104 on its one end, and also has an aperture at outside of the microdevice on another end.

As may be easily understandable, the ring-shaped channels 108 and 110 correspond to the supply channels in the microdevice of the present invention. The fluids A and B which are supplied from outside of the microdevice onto the end parts of the bores 112 and 114 will flow into the ring-shaped channels 108 and 110 through each bores 112 and 114 respectively.

The ring-shaped channel 108 and the bore 116 interconnect each other and the fluid A flowed into the ring-shaped channel 108 enters into the microchannel 124 through the bore 116. Further, the ring-shaped channel 110 and the bore 118 interconnect each other and the fluid B flowed into the ring-shaped channel 110 enters into the microchannel 126 through the bore 118. As is apparent from Figure 4, the fluids A and B are divided into four fluids in the joining region, each flows into the microchannels 124 and 126 respectively and then, flows toward the center 128.

As may be easily understood, the bore 116 or 118 and the microchannel 124 or 126 correspond to the subchannels in the microdevice of the present invention, and the center 128 of the joining element corresponds to the joining region. Further, the central axis of the microchannel 124 and the central axis of the microchannel 126 intersect each other at the center 128. The joined fluid will be discharged as a stream C through the bore 130 toward outside of the microdevice. Accordingly, the bore 130 corresponds to the discharge channel in the microdevice of the present invention.

Additionally, a precision instrument microfabrication technique such as semi-conductor fabrication technique, particularly etching (e.g., photolithoetching) fabrication, super minute electric discharge machining technique, optical molding method, mirror face finishing fabrication technique, diffusion bonding technique or so is applicable to manufacturing of the microdevice shown in Figure 4, and particularly to manufacturing of each element. Further, general-purpose machining technique, for example, a lathe and a drilling machine is also applicable. In accordance with those techniques, those skilled in the art will be able to easily manufacture the microdevice of the present invention.

Materials to be employed for the microdevice of the present invention are not particularly specified and any material to which the above fabrication techniques are adoptable and which does not receive any influence by the fluid to be joined together may be suitable. To be concrete, a metallic material (iron, aluminum, stainless steel, titanium, and various alloys, or so), a resin material (fluorocarbon resin, acrylic resin, or so) and a glass material (silicon, quartz, or so) are employable.

As one example, a microdevice shown in Figure 4 was fabricated using stainless. The specification of the microdevice was as follows:
Cross-sectional shape, width, depth and diameter of the ring-shaped channel 108:
   Rectangular cross-section, 1.5 mm, 1.5 mm and 25 mm respectively
Cross-sectional shape, width, depth and diameter of the ring-shaped channel 110:
   Rectangular cross-section, 1.5 mm, 1.5 mm and 20 mm respectively
Diameter and length of the bore 112:
   1.5 mm and 10 mm (circular cross-section) respectively
Diameter and length of the bore 114:
   1.5 mm and 10 mm (circular cross-section) respectively
Diameter and length of the bore 116:
   0.5 mm and 4 mm (circular cross-section) respectively
Diameter and length of the bore 118:
   0.5 mm and 4 mm (circular cross-section) respectively
Cross-sectional shape, width, depth and length of the microchannel 124:
   Rectangular cross-section, 200 µm, 200 µm and 12.5 mm respectively
Cross-sectional shape, width, depth and length of the microchannel 126:
   Rectangular cross-section, 200 µm, 200 µm and 10 mm respectively
Diameter and length of the bore 130:
   500 µm and 10 mm (circular cross-section) respectively

Additionally, in order to connect capillary tubes which supply the fluid A and the fluid B into the microdevice, and in order to connect a capillary tube which discharges the fluid C from the microdevice, a screw part is provided to the bores 112, 114 and 130.

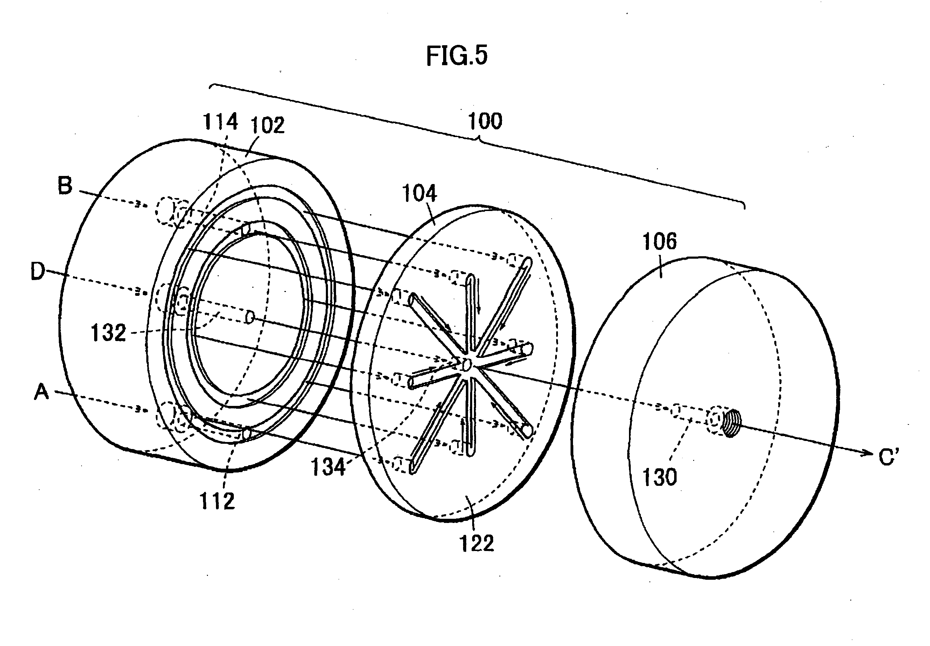

Another embodiment of the microdevice 100 in the present invention is illustrated in Figure 5. In the embodiment shown in Figure 5, a fluid D is further can be supplied in addition to the embodiment in Figure 4. The microdevice 100 shown in Figure 5 has additional bores 132 and 134 on the supply element 102 and on the joining element 104 respectively. The bore 134 has an opening at a center part of the surface 122.

When the elements shown in Figure 5 are fastened integrally in the same manner as the above description, those bores are integrated to form one channel. The fluid D supplied from outside of the microdevice passes through bores 132 and 134, and will join together at the center 128 as the joining region where the microchannels 124 and 126 join together.

As may be easily understandable, the bores 132 and 134 supply the fluid that is supplied into the microdevice toward the joining region without dividing the fluid. Accordingly, those bores constitute the supply channel of the microdevice in the present invention. As may be apparent, the central axes of the bores 132 and 134 as supply channels also intersect each other at the point 128. Accordingly, the microdevice shown in Figure 5 makes three kinds of the fluids join together, and supplies two kinds of fluids among those in the forms of substreams through subchannels toward the joining region, together with supplying remained one kind of the fluid just as it is through the supply channel toward the joining region.

The fluid D may be the fluid having necessity of being joined with the fluid A and the fluid B together, for example, the fluid having necessity of mixing with the fluids A and B. Further, the fluid D can be used as a carrier which promptly discharge the fluid as a mixture obtained by joining of the fluid A and the fluid B from the microdevice.

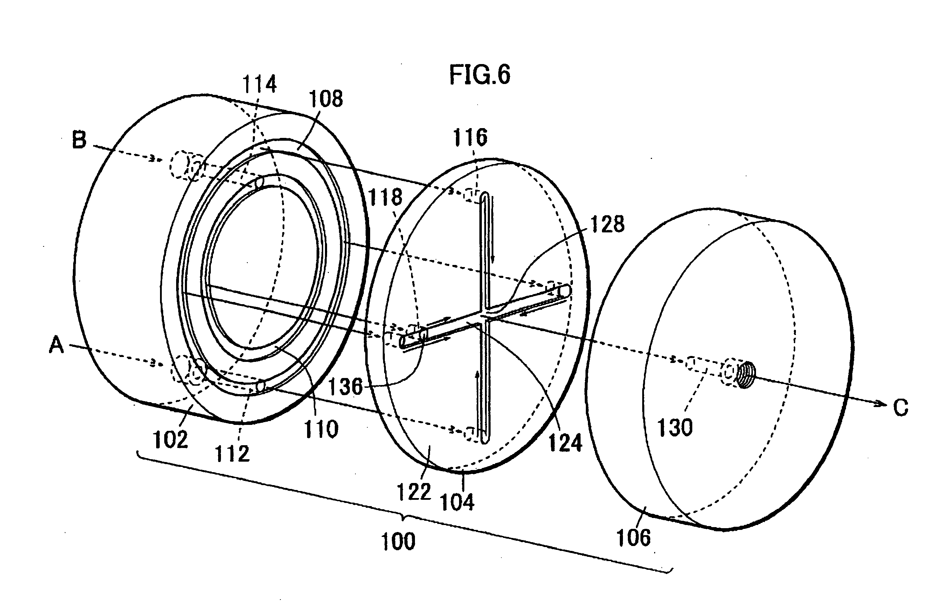

Still another embodiment of the microdevice 100 in the present invention is illustrated in Figure 6. In the embodiment shown in Figure 6, the number of the bore 118 in Figure 4 is designed as one, and the bore has an opening at an aperture member 136 in a midway of the microchannel 124 which transports the fluid A. Accordingly, it is different from the embodiment shown in Figure 4 in the viewpoint that the microchannel 126 does not exist, but it is substantially the same as that regarding other viewpoints.
As may be easily understandable, the fluid B flows into the microchannel 124 through the bore 114, the ring-shaped channel 110 and the bore 118. Therefore, because the bore 114, the ring-shaped channel 112 and the bore 118 supply the fluid just as the stream into the microchannel 124, those elements constitute a supply channel of the microdevice of the present invention.

On the other hand, the fluid A flows through the microchannel 124 as the substream similarly as the above description, and at the aperture member 136, the fluid A which flows through the microchannel 124 via the bore 116 and joins with the fluid B as a stream and the fluid B will join together and then, they flow toward the center 128. Regarding with the dimension and the arrangement about the bore 118 and the channel 124, they are constituted so that the central axes of the bore 118 and the channel 124 intersect each other.

Accordingly in the embodiment shown in Figure 6, the fluid A which flows toward the aperture member 136 is in the form of divided substreams and further, the fluid B which flows toward the aperture member 136 is in the form of a stream, the central axes of those intersect each other and then, the fluid A and the fluid B join together in the neighborhood of the aperture member 136 (i.e., the neighborhood of the aperture member 136 becomes to be the joining region). Afterwards, the joined fluid flows toward the center 128. Therefore, a portion between the aperture member 136 and the center 128 in the microchannel 124 can be considered as a discharge channel of the microdevice in the present invention.

Further, considering about the center 128 mainly, a stream that is a mixed fluid formed by joining of the fluid A and the fluid B together like the above description, and the fluid A which is divided and supplied in the form of the substream will join together at the center 128. Central axes of the channels 124 (thereupon, streams or substreams flowing through the channels) intersect each other at one point. Namely, even though the center 128 is considered as a basis, the embodiment shown in Figure. 6 constitute the microdevice of the present invention.

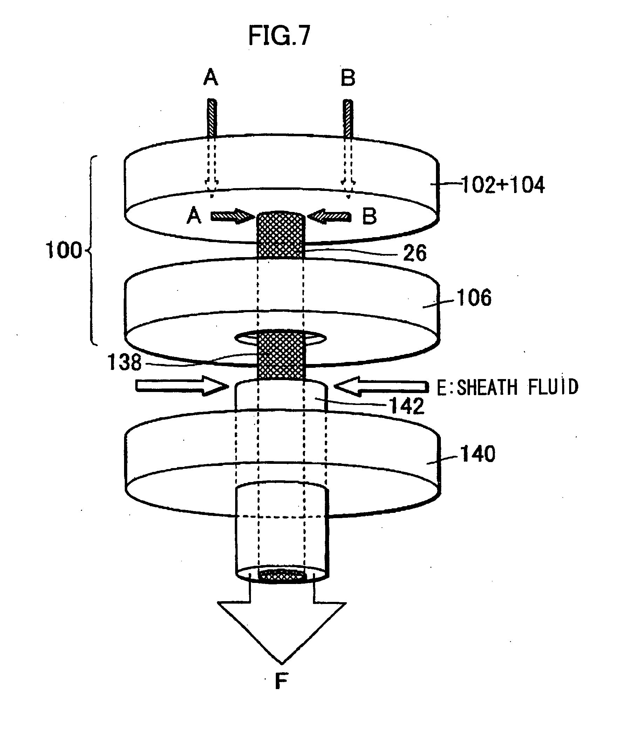

A preferable modified example of the microdevice in the present invention is shown in Figure 7. It is an embodiment for alleviating; preferably preventing an occlusion that is apprehended induced by an occurrence of unintended solid precipitation or aggregation caused by mixing (the term "mixing" includes a mixing accompanied by reaction in this occasion) of fluids, or an occlusion that becomes a problem in an occasion of generating fine particles. In the embodiment shown in Figure 7, the microdevice 100 which makes the fluid A and the fluid B joining together is shown by simplifying. In the embodiment shown in Figure 7, the supply element 102 and the joining element 104 are illustrated integrally, and the joined fluid is discharged through the discharge element 106 having the discharge channel 26. In the embodiment shown in Figure 7, elements are illustrated in a disassembled fashion and a stream 138 of the joined fluid flowing through the discharge channel 26 is also illustrated.

In the embodiment shown in Figure 7, a sheath fluid supply element 140 which can supply another fluid into a circumference of the discharge stream 138 is arranged adjacent to a discharge element 106. The sheath fluid supply element 140 has a tube member 142 with a dimension which can specify a ring-shaped space between the discharge stream 138 and itself, and is constituted so that it can supply a sheath fluid E toward the ring-shaped space. Specific method for supplying the sheath fluid E may be any appropriate method so long as capable of supplying the fluid in a manner that it surrounds the discharge stream.

For example, a method of providing a plurality of subchannels toward the discharge stream (i.e., stream of the joined fluid) 138 over the upper surface of the sheath fluid supply element 140 (or the lower surface of the discharge element 106) in Figure 7, and flowing an appropriate amount of the sheath fluid (or liquid) into the subchannel is employable. Further, a mixture F of the fluids A and B surrounded by the sheath fluid is discharged from the end part of the sheath fluid supply element. It is desirable that the number of the subchannel for the sheath fluid is as large as constitutionally possible. Furthermore, although the shape of the subchannel is arbitrary, those having a circular or a rectangular cross-section are preferable. The diameter or the equivalent diameter (when the cross-section of the subchannel is not circular) is usually not larger than 1 mm, particularly not larger than 500 µm, and preferably not larger than 100 µm. Regarding with the sheath fluid, any appropriate fluid that is inactive against an aimed operation such as mixing or reaction may be usable, and for example, a solvent for the fluid to be mixed or reacted may be usable.

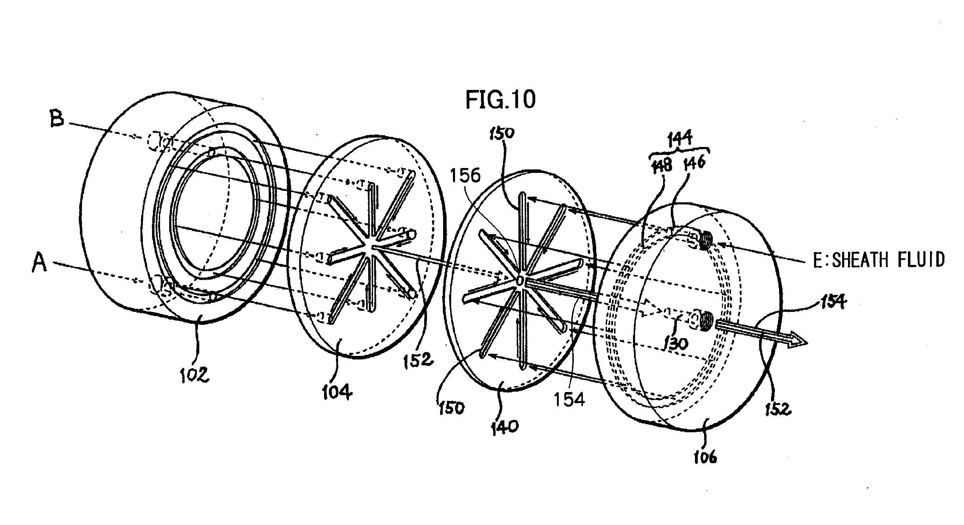

A microdevice that supplies the sheath fluid E is schematically shown in Figure 10 with the state of being disassembled. Although the microdevice resembles with the microdevice shown in Figure 4, it is different from the microdevice shown in Figure 4 in a viewpoint of having a sheath fluid supply element 140 between a joining element 104 and a discharge element 106, and in a viewpoint that the discharge element 106 has a supply channel 144 which supplies the sheath fluid. The sheath fluid supply channel 144 is constituted by a bore 146 provided to the discharge element 106 and of a ring-shaped channel 148 provided on a surface of a discharge element facing to the sheath fluid supply element 140. In the embodiment shown in Figure 10, the microdevice has a channel 144 which supplies an another fluid than the fluids (fluids A and B) flowing into the supply channel as a sheath fluid in a manner surrounding a joined fluid 152, and a subchannel 150 branching from the channel. The sheath fluid E flows from the ring-shaped supply channel 148 into eight subchannels 150's each having a square cross-section with sides of 50 µm after branching. Those subchannels 150's flow toward the end parts of the bore 130 (in the embodiment shown in Figure 10, toward a central part 156 of the sheath fluid supply element 140), and flow along with the discharge channel in a manner surrounding a joined fluid 152 (thereupon, forming a scabbard-shaped part 154 of the sheath fluid) flowing in the discharge channel, and finally, they are discharged from the microdevice. Additionally, as may be easily understandable, because the central part 156 of the sheath fluid supply element 140 is adjacent to the central part of the joining element, the central part 156 is able to function substantially as the joining region.

It is preferable for the microdevice of the present invention, that the diameter (or equivalent diameter) of the discharge channel becomes small on its midway. The diameter may become small step-by-step or may become small by degrees. Further, a straight line-shaped portion may exist after the diameter became small. In such an embodiment, it has an advantage that, even in the case where the diameter or the equivalent diameter in the joining region becomes large caused by joining together of a plurality of channels or subchannels, a diffusive mixing distance can be shortened by making the diameter of the discharge channel small and resultantly, the mixing is accelerated.

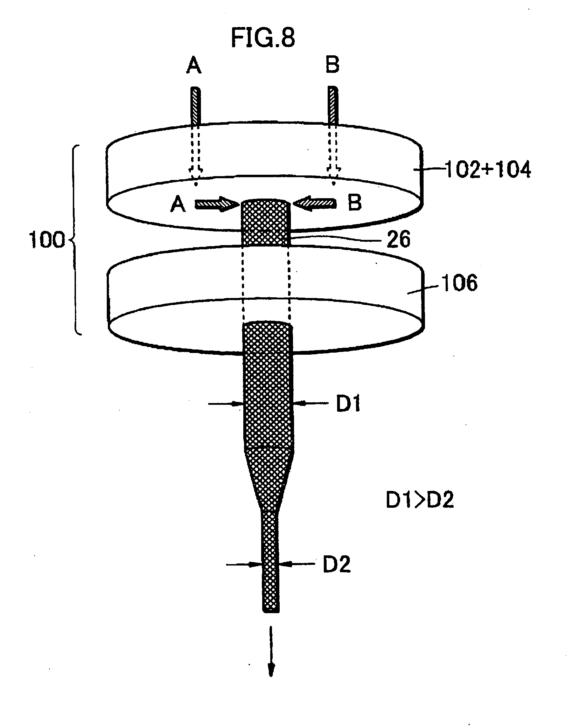

A microdevice of the above embodiment is illustrated in Figure 8. In Figure 8, a microdevice of the present invention is illustrated in the same manner as in Figure 7. In the embodiment shown in Figure 8, although the diameter becomes small at an extension part of the discharge channel 26 to be of taper shape, the discharge channel 26 in the discharge element 106 may become narrower without any problem. A reduction ratio D2/D1 of the diameter or the equivalent diameter D2 of the reduced part to the diameter or the equivalent diameter D1 of the discharge channel is, for example, 0.1 to 1, preferably 0.1 to 0.5.

As mentioned above, the microdevice of the present invention constituted by a supply element, a joining element and a discharge element is constituted by laminating board (or plate)-shaped parts (cylindrical parts with low height, i.e., discoid parts in this case) made in accordance with fabrication of a channel (or groove forming the channel or so) having such a functional element. Thereupon, a plurality of microdevices is usable by connecting themselves in series. When two microdevices, i.e., the first microdevice and the second microdevice are used, for example, using the discharge channel belonging to the discharge element of the first microdevice as a supply channel of the supply element of the second microdevice and a channel for supplying another fluid is provided in the supply element (thereupon, discharge element of the first microdevice) of the second microdevice. Arranging as the above, the fluid that is joined together and mixed in the first microdevice and another fluid that is newly supplied from the second microdevice are capable of being joined together at joining element of the second microdevice.

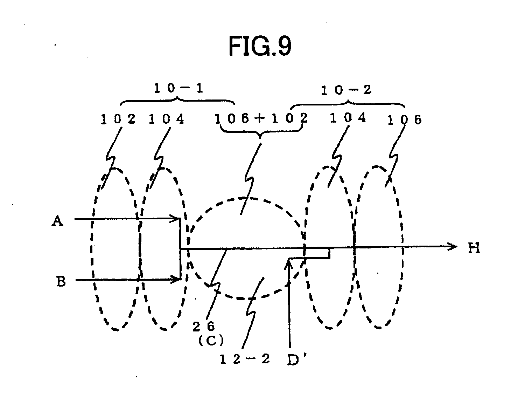

A conception diagram of the above microdevices that are connected in series is illustrated in Figure 9. Additionally, elements constituting the microdevice are drawn in broken lines. In the embodiment shown in Figure 9, the first microdevice 10-1 and the second microdevice 10-2 are connected in series. Each microdevice is constituted by the supply element 102, the joining element 104 and the discharge element 106. The discharge element 106 of the first microdevice serves as the supply element 102 of the second microdevice.

To be concrete, the discharge element 106 of the first microdevice also has a supply channel 12-2 in addition to the discharge channel 26, and by the possession, the discharge element 106 of the first microdevice can also serve as the supply element 102 of the second microdevice. In the embodiment shown in Figure 9, the second microdevice is a device which makes the fluid C and the fluid D' joining together, and resultantly a mixture fluid H is obtainable. As described above, by preparing a series of the microdevice in the present invention, a piping and a coupling can be saved and accompanying problems can be alleviated.

Additionally, the element that constitutes the microdevice of the present invention may have means for controlling the temperature of the fluid flowing through the microchannel that it has. For example, in accordance with burying a resistance-heating heater in the element, the temperature of the fluid flowing through the microchannel becomes controllable. Adopting the above idea, when the microdevice is used as a reactor, a reaction temperature is conveniently controllable.

### Industrial Applicability

The microdevice and the method for joining fluids of the present invention are utilizable to mixing and/or reaction of the fluid to be joined together. Enhancing both rapidity and homogeneity of mixing, homogeneous mixing and/or reaction will become possible, and as a conclusion, the microdevice and the method for joining fluids of the present invention are applicable to various kinds of chemical processes.

## Claims

1. A microdevice which supplies two or more kinds of fluids flowed into the microdevice independently toward a joining region respectively, and which discharges the fluids from the joining region, comprising:
a supply channel which supplies each fluid flowed into the microdevice toward the joining region; and
a discharge channel which discharges the joined fluid from the joining region toward outside of the microdevice, **characterized in that**
at least one supply channel which supplies the fluid has a plurality of subchannels for supplying the fluid supplied into the microdevice toward the joining region, and
the subchannels and the supply channels are formed so that at least one central axis of the plurality of subchannels and at least one central axis of the supply channel which supplies at least one kind of fluid other than the kind that the subchannel supplies or of the subchannel intersect at one point.

2. The microdevice according to claim 1, **characterized in that** the microdevice is a micromixer which mixes two or more kinds of fluids in the joining region.

3. The microdevice according to claim 1 or 2, **characterized in that** the at least one supply channel which supplies the fluid branches on its midway and forms a plurality of subchannels, and supplies the fluid supplied into the plurality of subchannels toward the joining region.

4. The microdevice according to any one of claims 1 to 3, **characterized in that** the plurality of subchannels have substantially same cross-sectional shape.

5. The microdevice according to any one of claims 1 to 4, **characterized in that** the microdevice has a plurality of subchannels for each fluid.

6. The microdevice according to any one of claims 1 to 5, **characterized in that** the two or more kinds of fluids are two kinds of fluid, the microdevice has a plurality of subchannels which supply one of those fluids, and at least one, preferably all of the central axes of the plurality of subchannels and the central axis of the supply channel for another fluid intersect at one point.

7. The microdevice according to any one of claims 1 to 5, **characterized in that** the two or more kinds of fluids are two kinds of fluid, the microdevice has a plurality of subchannels which supply each fluids, and at least one, preferably all of the central axes of the subchannels for one fluid and at least one, preferably all of the central axes of the a plurality of subchannels for another fluid intersect at one point.

8. The microdevice according to any one of claims 1 to 7, **characterized in that** an equivalent diameter of the subchannel and the supply channel is within a range of 1 µm to 1000 µm at a position adjacent to the joining region.

9. The microdevice according to any one of claims 1 to 8, **characterized in that** a fluid which is supplied toward the joining region from a subchannel is a different kind of fluid from a fluid which is supplied from an other subchannel or a supply channel most adjacent to the subchannel.

10. The microdevice according to any one of claims 1 to 9, **characterized in that** an equivalent diameter of the discharge channel is within the range of 1 µm to 1000 µm at a position adjacent to the joining region.

11. The microdevice according to any one of claims 1 to 10, **characterized in that** the microdevice is a microreactor which makes at least two kinds of fluids react in the joining region.

12. The microdevice according to any one of claims 1 to 11, **characterized by** comprising a channel or a subchannel which supplies a fluid other than the fluid flowing into the supply channel toward the joining region or the discharge channel to surround the joined fluids.

13. A microdevice assembly comprising a plurality of microdevices according to any one claims 1 to 12 connected in series, **characterized in that** a discharge channel of an upstream-side microdevice functions as a supply channel for just behind downstream-side microdevice.

14. A method for joining fluids which separately supplies streams of two or more kinds of fluids toward the joining region by means of microdevices having a joining region and which makes the fluids joining together at the region, **characterized by** comprising:
dividing a stream of at least one kind of the fluids to a plurality of substreams and to supply the substreams toward the joining region, or when a fluid without any dividing exists, supplying the stream of the fluid toward the joining region, and
supplying the fluids toward the joining region so that at least one central axis of at least one kind of substream in the fluid to be supplied after being divided, and a central axis of at least one substream or the stream (when a fluid without being divided exists) of at least one kind of fluids other than the kind of the fluid (to be supplied after being divided) intersect at one point.

15. The method for joining fluids according to claim 14, **characterized in that** two or more kinds of the fluids are mixed together in the joining region.

16. The method for joining fluids according to claim 14 or 15, **characterized in that** two or more kinds of fluids are allowed to react together in the joining region.
